# EUROPÄISCHE PATENTSCHRIFT

(11) **EP 0 729 665 B1**
(45) Veröffentlichungstag und Bekanntmachung des Hinweises auf die Patenterteilung: **27.05.1998**
(21) Anmeldenummer: 95900693.3
(22) Anmeldetag: 10.11.1994
(51) Int. Cl.: H02K 15/02, H02K 13/00, H02K 15/12, H02K 13/04

(54) **VERFAHREN ZUM HERSTELLEN EINES ANKERS FÜR EINEN ELEKTROMOTOR**
PROCESS FOR MANUFACTURING AN ARMATURE FOR AN ELECTRIC MOTOR
PROCEDE DE PRODUCTION D'UN INDUIT DE MOTEUR ELECTRIQUE

(30) Priorität: 15.11.1993 DE 4338913
(43) Veröffentlichungstag der Anmeldung: 04.09.1996
(73) Patentinhaber: VACONTEC, 9750 Vaduz (LI)
(72) Erfinder: GSTÖHL, Eugen, FL-9750 Vaduz (LI); HOEPTNER, Hans-Gerd, D-72076 Tübingen (DE)
(74) Vertreter: Hoeger, Stellrecht & Partner
(86) Internationale Anmeldenummer: EP9403709
(87) Internationale Veröffentlichungsnummer: WO9514324

(56) Entgegenhaltungen:
- GB-A- 808 168
- GB-A- 2 003 674
- US-A- 1 857 175
- US-A- 3 212 170
- PATENT ABSTRACTS OF JAPAN vol. 14, no. 108 (E-0896) 27. Februar 1990 & JP-A-01 308 147 (HITACHI) 12. Dezember 1989

## Beschreibung

Die Erfindung betrifft ein Verfahren zum Herstellen eines Ankers für einen Elektromotor.

Bei dem bisher allgemein ausgeübten Verfahren zum Herstellen solcher Anker geht man von vorgefertigten Bauteilen aus, insbesondere einem vorgefertigten Kommutator, wobei der Kommutator den üblichen, aus voneinander isolierten Kupfersegmenten bestehenden Ring sowie eine in das Innere des Ringes eingebrachte Kunststoff-Füllung, gewöhnlich aus Duroplast, mit zentraler Bohrung umfaßt. Man schiebt das Blechpaket und den Kommutator mit Paßsitz auf die Welle auf, wobei das Blechpaket an seinen Stirnseiten noch zusätzlich abgestützt werden kann. Hierauf wird die Drahtwicklung aus isoliertem Kupferdraht um das Blechpaket herum und in dessen Nuten verlaufend aufgebracht und mit den einzelnen Segmenten des Kommutators durch Schweißen verbunden, so daß alle Kommutatorsegmente mit Drähten belegt sind und die Drahtwicklung vorher festgelegte Windungszahlen umfaßt. Beim Verbinden des Kupferdrahtes mit den Kommutatorsegmenten wird eine solche Hitze erzeugt, daß die Lackisolation des Kupferdrahtes abbrennt, wobei der Draht zum Glühen kommen kann. Schließlich wird in den Bereich der Drahtwicklung zwischen Kommutator und Blechpaket ein Gießlack eingeträufelt und ausgehärtet, so daß die Einzeldrähte der Drahtwicklung gegeneinander fixiert sind.

Die nach dem bisherigen Verfahren hergestellten Anker für Elektromotoren haben zwei Hauptnachteile: Der vorgefertigte Kommutator wird auf der Ankerwelle dadurch fixiert, daß er mit seiner inneren Kunststoff-Füllung mit Preßsitz auf die Welle aufgeschoben wird. Da der Wellendurchmesser zur Erzielung des Preßsitzes etwas größer als die Bohrung in der Kunststoff-Füllung des Kommutators ist, wird der Kommutator notwendigerweise insgesamt etwas aufgeweitet, wodurch der feste Sitz der Kommutatorsegmente in der Kunststoff-Füllung gelockert werden kann und die Laufeigenschaften des Elektromotors beeinträchtigt werden können. Solange die Kunststoff-Füllung der Kommutatoren aus mit Asbest gefüllten Duroplasten bestand, hatte die Füllung eine hervorragende Elastizität und eine sehr starke Adhäsion zum Kupfermetall des Kommutators, so daß der erwähnte Nachteil praktisch nicht auftrat. Solche mit Asbest gefüllte Duroplaste dürfen jedoch neuerdings im Hinblick auf ihre gesundheitsschädliche Wirkung nicht mehr eingesetzt werden.

Der weitere Hauptnachteil der nach obigem Verfahren hergestellten Anker geht auf das unter starker Hitzeeinwirkung erfolgende Anschweißen der Drähte an die Kommutatorsegmente zurück. Die Schweißtemperaturen müssen so hoch sein, daß der Isolationslack des Kupferdrahtes verbrennt. Hierdurch entstehen am Kommutator zumindest kurzzeitig Temperaturen, die größer sind, als sie von den die Kunststoff-Füllung bildenden Duroplasten vertragen werden. Die Verschweißung führt also zu einer gewissen Vorschädigung des Kommutators. Solange die Kommutatoren asbesthaltige Duroplaste enthielten, war die hohe Schweißtemperatur unproblematisch, weil diese Duroplasten insoweit hitzeunempfindlich waren. Eine Beschädigung der asbest freien Kunststoff-Füllung des Kommutators aufgrund der hohen Schweißtemperaturen führt aber nun ebenfalls zu einer erheblichen Herabsetzung der Lebensdauer des Elektromotorankers.

Aus der US-A-3,212,170 ist es bekannt, den Anker eines Elektromotors nach Anlöten seiner Wicklung an den Kommutator mit Kunststoff auszugießen. Jedoch handelt es sich hierbei um Anker ohne Blechpaket, welche nur für spezielle Elektromotoren eingesetzt werden können. Eine Montage-Hilfsvorrichtung, welche nicht nur der Durchführung des Montagevorganges des Kommutators dient, sondern auch als Teil des Formwerkzeugs funktioniert, fehlt in dieser Druckschrift.

Gemäß US-A-1,857,175 werden einzelne Kommutatorensegmente mittels eines Einführungswerkzeuges in ein Formwerkzeug eingeführt und mittels am Umfang des Formwerkzeugs befindlicher Schubelemente festgehalten. Nach diesem Verfahren wird der Kommutatorrohling nicht auf der Welle angeordnet, und es gibt auch keine Hilfsvorrichtung, die als Teil des Werkzeugs die äußere Form der Kunststoff-Füllung mitbestimmt.

Entsprechend GB-A-808,168 wird zwar ein Kommutatorrohling auf einer Welle angeordnet, jedoch geschieht dies mit einem Teil, welches Bestandteil des Ankers bleibt. Bei diesem Verfahren bleiben also die vorgenannten Nachteile des Standes der Technik bestehen. Auf eine Hilfsvorrichtung zur Anordnung des Kommutatorrohlings auf der Welle, die gleichzeitig auch die äußere Form der Füllung mitbestimmt, wird in dieser Druckschrift nicht Bezug genommen.

Aus GB-A-2,003,674 ist ein Verfahren bekannt, bei dem ein Kommutatorrohling mittels einer Montage-Hilfsvorrichtung in dem Formwerkzeug gehalten wird, wobei diese Montage-Hilfsvorrichtung die äußere Form der Kunststoff-Füllung bestimmt. Bei diesem Verfahren wird jedoch die Wicklung erst nach der Ausbildung der Kunststoff-Füllung vorgenommen.

Es ist in erster Linie Aufgabe der Erfindung, ein Verfahren zum Herstellen von Ankern für Elektromotoren mit Blechpaket vorzuschlagen, welches von den oben geschilderten Mängeln frei ist und zu einem festen Sitz des Kommutators auf der Ankerwelle sowie zu keiner Beschädigung des Kommutators im Verlauf des Anschweißens der Drahtwicklung führt, und zwar auch dann, wenn der Kommutator eine asbestfreie Kunststoff-Füllung aufweist.

Gemäß der Erfindung wird ein Verfahren zum Herstellen eines Ankers für einen Elektromotor vorgeschlagen, wobei der Anker mit einer Welle, einem auf der Welle angeordneten Blechpaket, einem ebenfalls auf der Welle angeordneten, mehrere Kommutatorsegmente und eine Kunststoff-Füllung aufweisenden Kommutator und einer das Blechpaket umschlingenden, mit dem Kommutator verschweißten Drahtwicklung versehen ist, und wobei man
a) zunächst einen Kommutatorrohling ohne Kunststoff-Füllung mittels einer Montage-Hilfsvorrichtung auf einer Welle fest anordnet, hierauf
b) die Drahtwicklung aufbringt und mit dem Kommutatorrohling verschweißt, anschließend
c) die aus Kommutatorrohling, Blechpaket, Drahtwicklung und Montage-Hilfsvorrichtung bestehende Anordnung mit einem Formwerkzeug umschließt, wobei die Montage-Hilfsvorrichtung einen Teil dieses Werkzeugs bildet und die äußere Form der Kunststoff-Füllung mitbestimmt, hierauf
d) die aus Kommutatorrohling, Blechpaket, Drahtwicklung und Montage-Hilfsvorrichtung bestehende Anordnung im Formwerkzeug mit Kunststoff füllt und zu einer in sich stabilen, kompakten Einheit verbindet, sowie schließlich
e) die Hilfsvorrichtung nach Herausnahme der Anordnung aus dem Formwerkzeug wieder entfernt und den Kommutatorrohling zum endgültigen Kommutator umgestaltet.

Die nachstehende Beschreibung bevorzugter Ausführungsformen der Erfindung dient im Zusammenhang mit beiliegender Zeichnung der weiteren Erläuterung. Es zeigen:
- Fig 1: eine Schnittansicht eines Ankers für einen Elektromotor in einem bestimmten Fertigungsstadium entlang der Linie 1-1 in Figur 2;
- Fig. 2: eine Schnittansicht entlang der Linie 2-2 in Figur 1;
- Fig. 3: eine Ansicht des Ankers aus Figur 1 in einem nachfolgenden Fertigungsstadium nach teilweiser Aufbringung einer Drahtwicklung;
- Fig. 4: den Anker aus Figur 3 in einer Gießoder Spritzform;
- Fig. 5: die Form aus Figur 4 mit eingebrachtem Kunststoff;
- Fig. 6: den aus der Form gemäß Figur 5 entfernten Anker;
- Fig. 7: den Anker aus Figur 6 nach dem Einsägen von Schlitzen in einen Kommutatorrohling;
- Fig. 8: eine Schnittansicht einer anderen Ausführungsform eines Ankers für einen Elektromotor entlang der Linie 8-8 in Figur 9;
- Fig. 9: eine Schnittansicht entlang der Linie 9-9 in Figur 8;
- Fig. 10: den Anker aus Figur 8 in einem Formwerkzeug;
- Fig. 11: den Anker aus Figur 10 nach Austausch einer Hilfswelle durch eine endgültige Ankerwelle;
- Fig. 12: eine Schnittansicht einer weiteren Ausführungsform eines Ankers für einen Elektromotor mit Hilfswelle;
- Fig. 13: den mit einer Kunststoff-Füllung vergossenen Anker aus Figur 12 nach Austausch der Hilfswelle gegen die endgültige Ankerwelle und
- Fig. 14: eine weitere Ausführungsform eines Ankers für einen Elektromotor mit doppelter Isolation im Bereich des Kommutators.

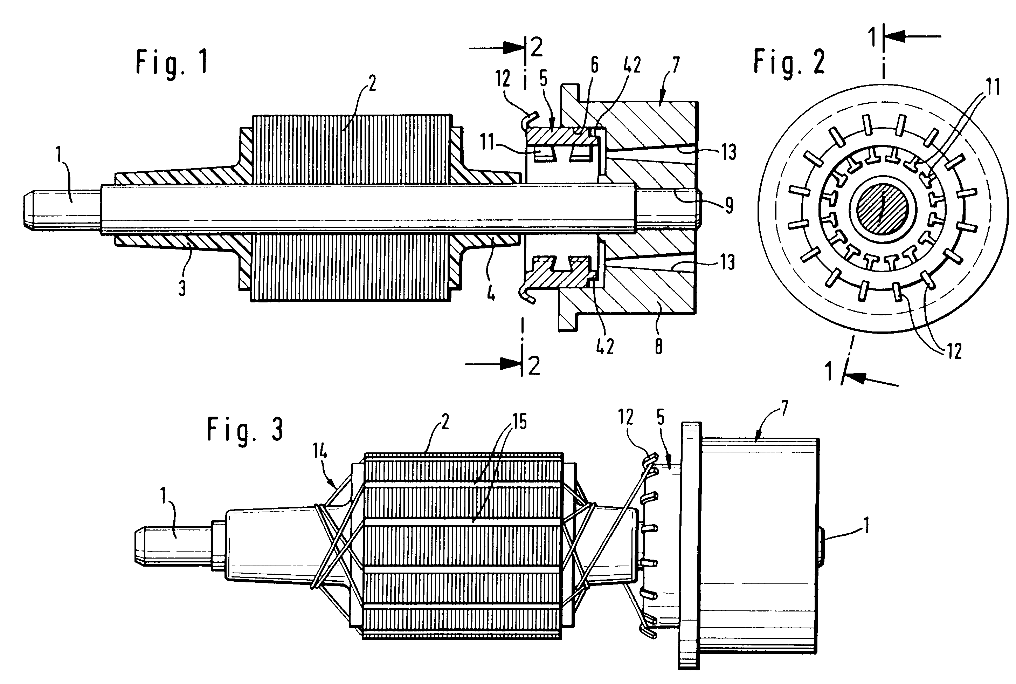

Anhand von Figur 1 bis 7 werden nachstehend die wesentlichen Schritte des erfindungsgemäßen Verfahrens zum Herstellen eines Ankers für einen Elektromotor beschrieben.

Wie die Figur 1 zeigt, ist auf eine Welle 1 eines Ankers für einen Elektromotor in üblicher Weise ein Blechpaket 2 mit Paßsitz aufgeschoben, wobei die erste und letzte Lamelle des Blechpakets durch hutförmige Hülsen 3 bzw. 4 an den Stirnseiten des Blechpakets 2 zusätzlich abgestützt sind. Ein Kommutatorrohling 5 in Gestalt eines aus Kupfer gefertigten, zusamenhängenden Ringes ist in eine entsprechende zylindrische Aussparung 6 einer Montage-Hilfsvorrichtung 7 mit Paßsitz eingefügt. Die Hilfsvorrichtung 7 hat die Form einer zylindrischen Montagebuchse und umfaßt ein relativ dickes Bodenteil 8 mit zentraler Bohrung 9, mit welcher die Hilfsvorrichtung 7 auf das Ende der Welle 1 mit Paßsitz aufgeschoben ist. Hierdurch ist der ringförmige Kommutatorrohling 5 freitragend über der Welle 1 seitlich vom Blechpaket 2 fest abgestützt, wobei insbesondere zwischen der Innenseite des Kommutatorrohlings 5 und der Außenseite der Welle 1 ein relativ großer Raum frei bleibt.

Der ringförmige Kommutatorrohling 5 weist in gegenseitigem Abstand radial nach innen gerichtete, einstückig angeformte Füßchen 11 von T-förmigem Querschnitt auf. An seiner dem Blechpaket 2 zugewandten Seite sind am Kommutatorrohling 5 in gegenseitigem Abstand ebenfalls einstückig angeformte Haken 12 ausgebildet.

An der Montage-Hilfsvorrichtung 7 sind mehrere axial durchgehende Kanäle 13 vorgesehen, die sich von der freien Stirnseite der Hilfsvorrichtung 7 bis in den freien Raum innerhalb des Kommutatorrohlings 5 erstrecken.

In Figur 3 ist ein Fertigungszustand des Ankers dargestellt, bei welchem auf das Blechpaket 2 teilweise eine Drahtwicklung 14 aufgebracht ist, die einerseits in üblicherweise vorhandenen Nuten 15 des Blechpakets verläuft und andererseits in ebenfalls herkömmlicher Weise mit ihren Enden an die Haken 12 des Kommutatorrohlings 5 angeschweißt ist. Während des Schweißvorgangs wird der Kommutatorrohling 5 durch die Hilfsvorrichtung 7 fest auf der Welle 1 gehalten. Da der Kommutatorrohling nicht mit Kunststoff gefüllt ist, kann dieser durch die bei der Verschweißung entstehende Hitzeeinwirkung auch nicht beschädigt werden. Im Verlauf der Verschweißung wird der die Drahtwicklung 14 bildende Draht im Bereich der Haken soweit erhitzt, daß eine auf dem Draht - gewöhnlich Kupferdraht - befindliche Lackisolierung schmilzt und eine elektrisch leitende Verbindung zwischen den Haken 12 und dem Draht hergestellt wird.

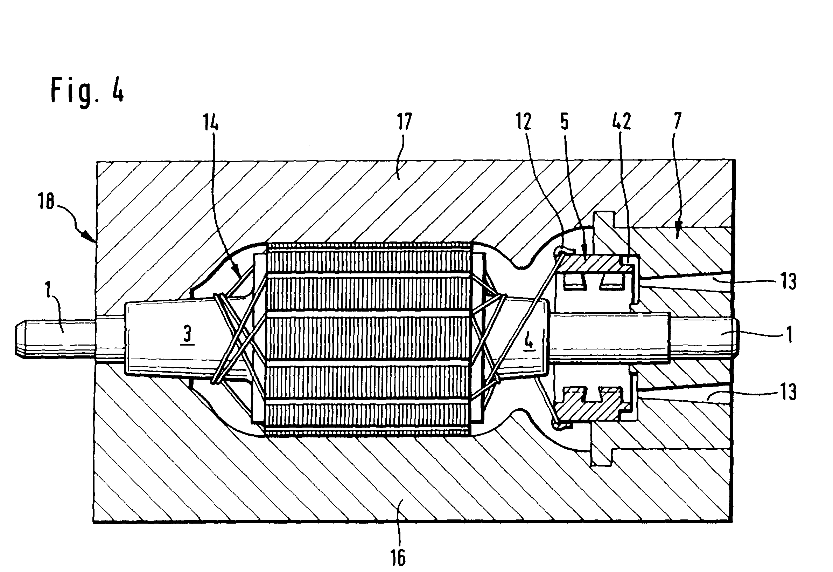

Nach der Fertigstellung der Drahtwicklung 14 werden - gegebenenfalls gleichzeitig mit der Verschweißung - die Haken 12 in der in Figur 4 ersichtlichen Weise an den Kommutatorrohling 5 herangebogen. Anschließend wird die aus der Welle 1, dem Blechpaket 2, dem Kommutatorrohling 5, der Montage-Hilfsvorrichtung 7 und der Drahtwicklung 14 bestehende Einheit in ein aus zwei Hälften 16, 17 bestehendes Formwerkzeug 18 eingebracht, wie aus Figur 4 ersichtlich. Dabei bildet die eine (in Figur 4 links gelegene) Stirnwand der Montage-Hilfsvorrichtung 7 einen Teil des Formwerkzeugs 18, indem sie dessen Formhohlraum nach der einen Seite hin abschließt. Die beschriebene Einheit ist einerseits (in Figur 4 links) durch die Welle 1 und andererseits (in Figur 4 rechts) durch die Hilfsvorrichtung 7 im Formhohlraum des Formwerkzeuges 18 sicher gehalten.

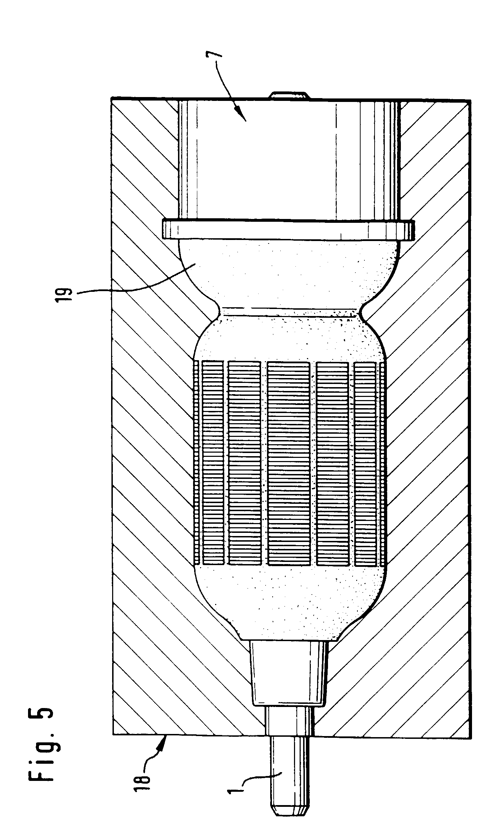

Nunmehr wird über die Kanäle 13 der Montage-Hilfsvorrichtung in den Hohlraum des Formwerkzeuges 18 eine Kunststoff-Füllung eingebracht, und zwar insbesondere durch Spritzgießen, Spritzpressen oder Kompressionspressen. Der eingebrachte Kunststoff füllt alle freien Räume des Formwerkzeuges 18 aus, insbesondere den Raum innerhalb des Kommutatorrohlings 5, und umschließt weiterhin die Drahtwicklung 14 einschließlich der Haken 12 am Kommutatorrohling 5, wie aus Figur 5 ersichtlich, in welcher die Kunststoff-Füllung mit dem Bezugszeichen 19 bezeichnet ist. Die Füßchen 11 dienen dabei der festen Verankerung des Kommutatorrohlings 5 im Kunststoff.

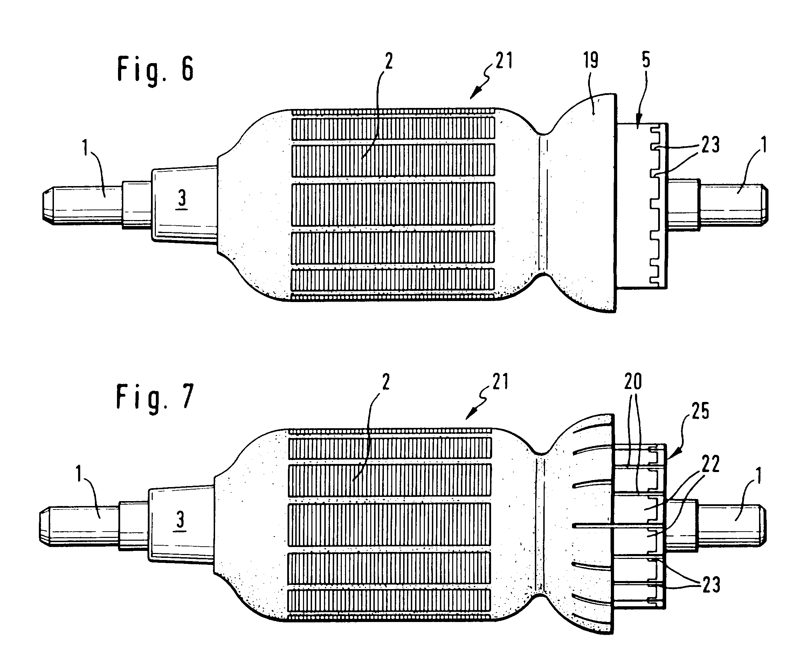

Die Figur 6 zeigt den entformten, also aus dem Formwerkzeug 18 herausgenommenen, mit Kunststoff vergossenen Anker 21, nachdem anschließend die Montage-Hilfsvorrichtung vom Kommutatorrohling 5 abgezogen wurde, so daß letzterer mit seiner Oberfläche nun freiliegt.

Die Figur 7 zeigt den endgültigen Fertigungszustand des Ankers 21, welcher sich vom Fertigungszustand gemäß Figur 6 dadurch unterscheidet, daß nunmehr im Bereich des Kommutatorrohlings 5 zwischen den einzelnen, von Kunststoff überdeckten Haken 12 achsparallele Schlitze 20 eingesägt sind, welche den gesamten Rohling bis zu dessen innerer Kunststoff-Füllung durchdringen, so daß einzelne, elektrisch voneinander getrennte Kommutatorsegmente 22 entstehen, von denen jeweils eines durch den an ihm einstückig angeordneten Haken 12 mit einem entsprechenden Teil der Drahtwicklung 14 in herkömmlicher Weise verbunden ist. Das Einsägen der Schlitze 20 erfolgt über die gesamte axiale Erstreckung des Kommutatorrohlings 5 hinweg, also jeweils beginnend an dem die Haken 12 tragenden Rand bis zur gegenüberliegenden Kante.

Wie aus Figur 7 hervorgeht, sind an dieser gegenüberliegenden Kante des Kommutatorrohlings 5 im Bereich der zu sägenden Schlitze beidseits "Fenster" 23 ausgebildet, in denen der Schlitz ausläuft. Derartige Fenster 23 können jeweils auch zwischen den Haken 12 am gegenüberliegenden Rand des Kommutatorrohlings ausgebildet werden. Die Sägung erfolgt mit Hilfe einer kleinen Kreissäge, wobei der Schnitt an dem die Haken 12 tragenden Rand des Kommutatorrohlings 5 beginnt und in den Fenstern 23 an der gegenüberliegenden Kante ausläuft. Die mit Kunststoff gefüllten Fenster verhindern beim Auslaufen des Sägeblattes eine Gratbildung an den einzelnen Kommutatorsegmenten, so daß die Gefahr eines elektrischen Kurzschlusses ausgeschaltet ist.

Auf diese Weise entsteht aus dem ursprünglichen Kommutatorrohling 5 der endgültige Kommutator 25.

Durch den nachträglich in das Innere des Kommutatorrohlings 5 eingepreßten Kunststoff ist der fertige Kommutator 25 fest auf der Welle 1 verankert. Die bisher bestehende Gefahr einer Aufweitung des Kommutators bei einem nachträglichen Aufpressen des vorher bereits mit Kunststoff gefüllten Kommutators auf die Welle 1 ist behoben. Da außerdem die Verschweißung der Drahtwicklung 14 mit den Haken 12 des Kommutatorrohlings 5 vor dem Einbringen der Kunststoff-Füllung 19 vorgenommen wird, wird letztere durch die bei der Verschweißung auftretende Hitze in keiner Weise beschädigt, so daß auch insoweit die Lebensdauer eines mit dem in der beschriebenen Weise hergestellten Anker bestückten Elektromotors nicht verkürzt wird. Da die Kunststoff-Füllung 19 im Verlauf der Fertigung des Ankers 21 keiner Hitzeeinwirkung unterworfen wird, können auch andere Kunststoffe als bisher verwendet werden, beispielsweise auch Thermoplaste.

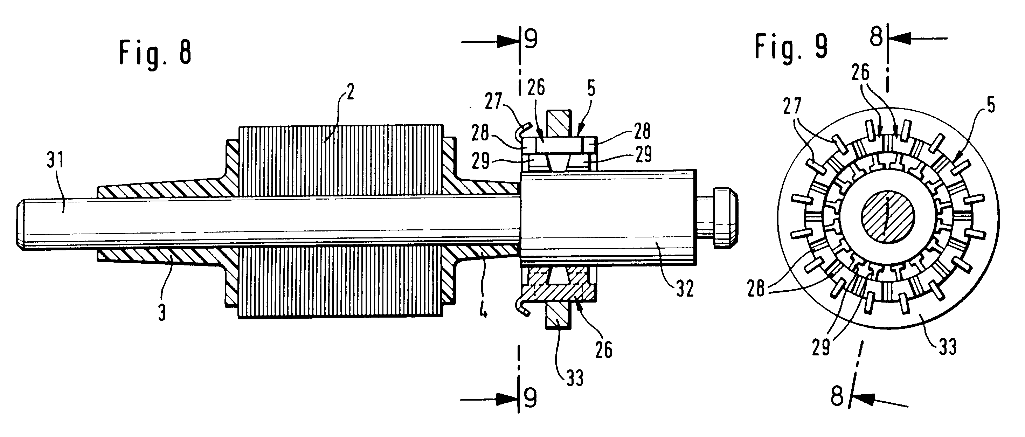

Die Figuren 8 bis 11 dienen der Erläuterung einer weiteren Ausführungsform der Erfindung. Im Gegensatz zur Ausführungsform gemäß Figur 1 bis 7 besteht bei der Ausführungsform nach Figur 8 bis 11 der Kommutatorrohling 5 nicht aus einem in sich geschlossenen, z.B. aus einem Kupferblechband gebildeten Ring, sondern von vornherein aus einzelnen Kommutatorsegmenten 26 mit Haken 27, Fenstern 28 und radial nach einwärts ragenden Füßchen 29. Um diese einzelnen Kommutatorsegmente in einem Kreis dicht aneinander anliegend zu halten, wird eine Hilfswelle 31 mit einem verdickten zylindrischen Abschnitt 32 verwendet. Die Füßchen 29 der Kommutatorsegmente 26 stützen sich auf der Außenseite des verdickten Wellenabschnitts 32 ab und werden außen von einem massiven Ring 33 aus Metall zusammengehalten. Auf diese Weise entsteht ein Kommutatorrohling 5, der weitgehend dem Kommutatorrohling 5 gemäß Figur 1 und 2 entspricht mit der Ausnahme, daß er nicht "selbsttragend" ist, sondern von dem innen liegenden, verdickten Wellenabschnitt 32 und dem äußeren Ring 33 ähnlich einem Gewölbe zusammengehalten ist. Die einzelnen Kommutatorsegmente 26 liegen dabei mit ihren Seitenwänden unmittelbar, also elektrisch leitend, aneinander an.

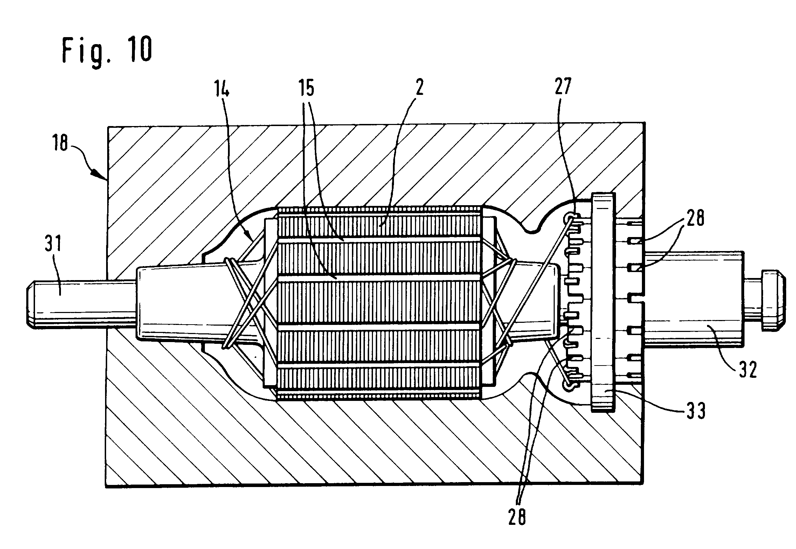

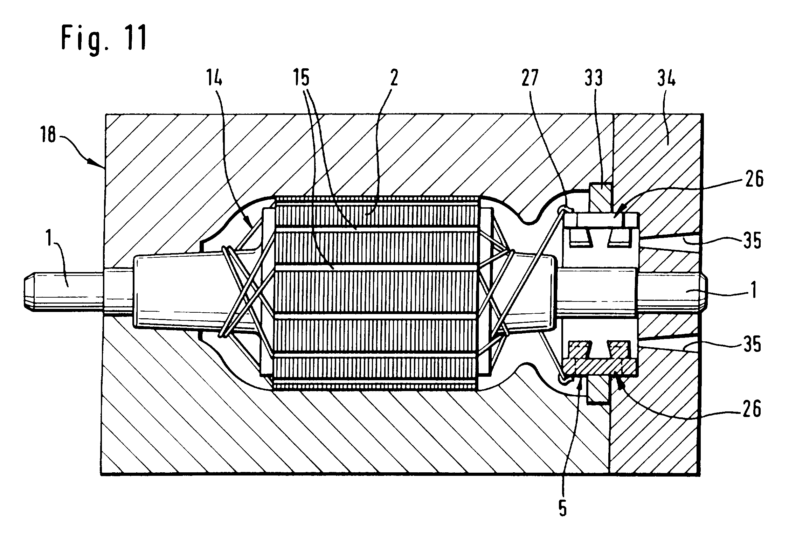

Auf die Welle 31 werden weiterhin in der bereits beschriebenen Weise (vgl. Figur 1) das Blechpaket 2 und die Hülsen 3, 4 aufgebracht. Anschließend wird die Anordnung, wie aus Figur 10 ersichtlich, wiederum in ein Formwerkzeug 18 entsprechend Figur 4 eingesetzt, wobei nunmehr der Ring 33 der Halterung der Anordnung im Formwerkzeug 18 dient. Vor dem Einbringen der Anordnung in das Formwerkzeug 18 wurde in der ebenfalls bereits beschriebenen Weise die Drahtwicklung 14 aufgebracht und mit den Haken 27 verschweißt, worauf diese, wie in Figur 10 dargestellt, umgebogen werden. Nunmehr wird die Hilfswelle 31 herausgezogen und durch die eigentliche oder endgültige Ankerwelle 1 ersetzt (Figur 11). Der aus den einzelnen Kommutatorsegmenten 26 zusammengesetzte Kommutatorrohling 5 ist dabei, wie dargestellt, über den Ring 33 freitragend und unter Ausbildung eines freien Raumes zur Welle 1 hin im Formwerkzeug 18 gehalten. Nunmehr wird auf das Formwerkzeug 18 ein Deckel 34 mit Kanälen 35 dicht aufgesetzt und Kunststoff eingepreßt, so daß dieser die gesamten Freiräume im Formwerkzeug 18, insbesondere den ringförmigen Zwischenraum zwischen Welle 1 und Kommutatorrohling 5 füllt. Nach Aushärtung des Kunststoffes wird der mit Kunststoff gefüllte und umhüllte Anker aus dem Formwerkzeug 18 herausgenommen. Anschließend wird nach Abnahme des Ringes 33 in der ebenfalls bereits beschriebenen Weise zwischen den einzelnen Kommutatorsegmenten 26 durchgehend bis zur Kunststoff-Füllung eingesägt, so daß elektrisch voneinander isolierte Kommutatorsegmente entstehen, welche durch die Kunststoff-Füllung zusammengehalten und über die Haken 27 jeweils mit einem entsprechenden Teil der Drahtwicklung 14 verbunden sind. Das Endprodukt, das sich nach Abschluß des Verfahrens gemäß Figur 8 bis 11 ergibt, entspricht praktisch dem in Figur 7 dargestellten Erzeugnis.

Es ist zu beachten, daß sich beim Einfüllen des Kunststoffes bei den bisher beschriebenen Verfahren auch die Nuten 15 der Blechpakete, welche die Drahtwicklung 14, gegebenenfalls unter Zwischenlegung isolierender Papierstreifen, aufnehmen, mit Kunststoff füllen, wie dies in Figur 5 angedeutet ist.

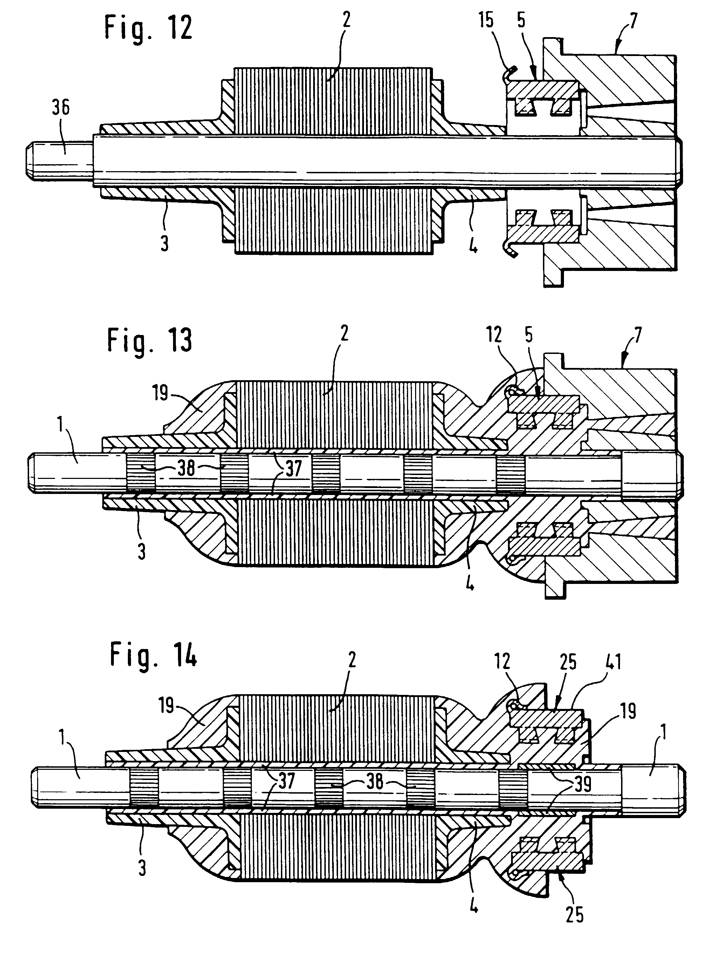

Bei den Ausführungsformen von Elektromotorankern gemäß Figur 12 und 13 ist wiederum ein in sich geschlossener, ringförmiger Kommutatorrohling 5 verwendet, der in einer Montage-Hilfsvorrichtung 7 in Gestalt einer zylindrischen Montagebuchse gehalten ist. Die Figur 12 entspricht im übrigen weitgehend der Figur 1. Im Unterschied zu Figur 1 wird in Figur 12 allerdings nicht die endgültige Ankerwelle 1, sondern eine Hilfswelle 36 verwendet. Nach der Ausbildung der Drahtwicklung 14 und ihrer Verbindung mit den Haken 12 des Kommutatorrohlings 5 (in Figur 12 und 13 nicht dargestellt) wird der so vorbereitete Anker mit der Hilfswelle 36 in ein Formwerkzeug 18 (ähnlich Figur 4) eingesetzt. Nunmehr wird die Hilfswelle 36 (nach rechts) herausgezogen und durch die eigentliche Ankerwelle 1 ersetzt (Figur 13), die einen geringeren Durchmesser als die Hilfswelle 36 hat, so daß sich im Formwerkzeug zwischen der Welle 1 und den Innenseiten des Blechpakets 2 sowie der Buchsen 3, 4 ein ringförmiger Zwischenraum ergibt, der sich ebenfalls mit Kunststoff füllt, so daß sich zwischen Blechpaket 2 und Welle 1 ein elektrisch isolierendes Kunststoffrohr 37 ausbildet. Auf diese Weise lassen sich elektrisch isolierte Anker herstellen, wie sie für bestimmte Elektrogeräte vorgeschrieben sind.

Wie aus Figur 13 weiterhin hervorgeht, hat die Welle 1 gerändelte Bereiche 38, die der besseren Verhaftung des Kunststoffes mit der Welle dienen.

Die Figur 14 schließlich zeigt eine weiterhin abgewandelte Ausführungsform eines nach dem beschriebenen Verfahren hergestellten Ankers für einen Elektromotor, der dadurch "doppelt isoliert" ist, daß zwischen der Kunststoff-Füllung 19 im Bereich des Kommutatorrohlings 5 und der Welle 1 ein relativ kurzes Rohr 39 aus elektrisch isolierendem Werkstoff angeordnet ist. Dieses Rohr 39 wird aufgebracht, bevor die Kunststoff-Füllung 19 in das Formwerkzeug 18 eingespritzt wird.

Bei einer anderen Ausführungsform der Erfindung ähnlich derjenigen, wie sie im Zusammenhang mit Figur 8 bis 11 beschrieben wurde, werden zwischen die einzelnen Kommutatorsegmente 26 des Kommutatorrohlings 5 elektrisch isolierende Schichten, beispielsweise aus Mikanit, eingefügt. In diesem Falle entfällt das nachträgliche Einsägen der Schlitze zwischen die Kommutatorsegmente 26, da diese von vornherein elektrisch voneinander isoliert sind.

Man kann andererseits einzelne Kommutatorsegmente, aus denen der Kommutatorrohling 5 zusammengefügt wird, von vornherein mittels einer entsprechend angepaßten Hilfsvorrichtung 7 so in gegenseitigen Abständen im Formwerkzeug zentral zur Ankerwelle 1 haltern, daß der Kunststoff zwischen die einzelnen Segmente einfließt und diese voneinander elektrisch isoliert. Auch in diesem Falle ist eine nachträgliche Einsägung von Schlitzen entbehrlich.

Im Verlauf einer Endbearbeitung muß der Anker noch gewuchtet werden. Dies kann mit Vorteil folgendermaßen geschehen: Der mit Kunststoff umspritzte Anker wird nach dem Entformen und vor einem Überdrehen der Bürstenlaufbahn des Kommutators an der Außenseite des Blechpakets eingespannt, worauf an den Enden der Welle 1 Lagersitze geschliffen oder gedreht werden. Danach wird in an sich bekannter Weise ausgewuchtet. Es ist jedoch zu erwarten, daß die bei diesem Vorgang aufzubringende Korrektur relativ gering sein wird. Eine weitere Möglichkeit besteht darin, nach dem Messen der Unwucht und nach dem Überdrehen der Bürstenlaufbahn des Kommutators zwei jeweils an den Enden der Ankerwelle 1 ansetzende, rotierende Messer- oder Schleifköpfe in ihrer Zentrumsachslage zur Mittelachse der Ankerwelle 1 exzentrisch so einzustellen und alsdann die Lagersitze an den Wellenenden so auszuarbeiten, daß die Unwucht hierdurch ausgeglichen wird.

Bei den bisher beschriebenen Ausführungsformen der Erfindung ist die Drahtwicklung 14 mit Haken 12 oder 27 des Kommutators verbunden. Statt derartiger Haken können auch Schlitze im Kommutatorrohling verwendet werden, in welche die Drahtenden der Drahtwicklung eingeschweißt werden.

Die Haken 12, 27 am Kommutator können, wie bereits beschrieben und dargestellt, mit Kunststoff übergossen werden und zwar so weit, daß am Kommutator selbst noch eine ausreichend breite Bürstenlaufbahn verbleibt, die in Figur 14 mit dem Bezugszeichen 41 bezeichnet ist, in Wirklichkeit jedoch dadurch breiter ausgebildet werden kann, daß sich der die Haken 12 überdeckende Kunststoffüberzug weniger weit über den Kommutator 25 erstreckt.

Auch ist es möglich, zur besseren Fixierung des Kommutators 25 auf der Ankerwelle 1 im Bereich des Kommutators Rändelungen oder Splints - ähnlich den Rändelungen 38 in Figur 13 und 14 - vorzusehen, die eine gute Verhaftung mit dem eingespritzten Kunststoff bewirken.

Bei Kommutatoren 25, die, wie beschrieben, von vornherein aus einzelnen, gegenseitig isolierten Kommutatorsegmenten 26 bestehen, also nicht gesägt werden müssen, kann es günstig sein, diese Segmente außen durch aufgespritzte Kunststoffringe zu stabilisieren. Einerseits erfolgt eine solche Stabilisierung bereits durch die Überspritzung der mit der Drahtwicklung 14 verbundenen Haken 27 mit Kunststoff (Figur 11). Andererseits können auch, wie nachstehend anhand von Figur 1 erläutert, an den den Haken 12 abgewandten Kanten der einzelnen Segmente 26 absatzartige Ausnehmungen 42 in Form von Stufen vorgesehen werden, die sich beim Spritzgießen ebenfalls mit Kunststoff füllen und einen die einzelnen Segmente 26 stabilisierenden Ring bilden.

## Patentansprüche

1. Verfahren zum Herstellen eines Ankers (21) für einen Elektromotor, wobei der Anker mit einer Welle (1), einem auf der Welle angeordneten Blechpaket (2), einem ebenfalls auf der Welle angeordneten, mehrere Kommutatorsegmente und eine Kunststoff-Füllung (19) aufweisenden Kommutator (25) und einer das Blechpaket umschlingenden, mit dem Kommutator verschweißten Drahtwicklung (14) versehen ist, und wobei man
a) zunächst einen Kommutatorrohling (5) ohne Kunststoff-Füllung mittels einer Montage-Hilfsvorrichtung (7, 32, 33) auf einer Welle (1; 31, 36) fest anordnet, hierauf
b) die Drahtwicklung (14) aufbringt und mit dem Kommutatorrohling (5) verschweißt, anschließend
c) die aus Kommutatorrohling (5), Blechpaket (2), Drahtwicklung (14) und Montage-Hilfsvorrichtung (7; 32, 33) bestehende Anordnung mit einem Formwerkzeug (18) umschließt, wobei die Montage-Hilfsvorrichtung (7; 33) einen Teil dieses Werkzeugs bildet und die äußere Form der Kunststoff-Füllung (19) mitbestimmt, hierauf
d) die aus Kommutatorrohling (5), Blechpaket (2), Drahtwicklung (14) und Montage-Hilfsvorrichtung (7; 33) bestehende Anordnung im Formwerkzeug (18) mit Kunststoff füllt und zu einer in sich stabilen, kompakten Einheit verbindet, sowie schließlich
e) die Hilfsvorrichtung (7; 33) nach Herausnahme der Anordnung (5, 2, 7, 33, 14) aus dem Formwerkzeug (18) wieder entfernt und den Kommutatorrohling (5) zum endgültigen Kommutator (25) umgestaltet.

2. Verfahren nach Anspruch 1, dadurch gekennzeichnet, daß man als Montage-Hilfsvorrichtung eine zylindrische Montagebuchse (7) mit einem auf einer Stirnseite angeordneten Bodenteil (8) verwendet, welche den Kommutatorrohling (5) außen abstützend umschließt und mit einer im Bodenteil vorgesehenen Bohrung (9) auf die Welle (1) aufschiebbar ist.

3. Verfahren nach Anspruch 1, dadurch gekennzeichnet, daß man einen Kommutatorrohling (5) aus einzelnen Kommutatorsegmenten (26) verwendet, die sich einerseits auf einer Hilfswelle (31) abstützen und andererseits außen von einem als Montage-Hilfsvorrichtung dienenden, starren Ring (33) umschlossen werden.

4. Verfahren nach Anspruch 3, dadurch gekennzeichnet, daß man die einzelnen Kommutatorsegmente (26) in der Hilfsvorrichtung (33) elektrisch voneinander isoliert.

5. Verfahren nach Anspruch 1, dadurch gekennzeichnet, daß man die Kunststoff-Füllung (19) durch Spritzgießen, Spritzpressen oder Kompressionspressen vornimmt.

6. Verfahren nach Anspruch 1, dadurch gekennzeichnet, daß man am Kommutatorrohling (5) an einer oder beiden Stirnseiten Fenster (23) ausbildet, die mit Kunststoff ausgefüllt werden.

7. Verfahren nach Anspruch 1, dadurch gekennzeichnet, daß man die Schweißstellen, an denen die Drahtwicklung (14) mit dem Kommutatorrohling (5) verbunden ist, ebenfalls mit Kunststoff umhüllt.

8. Verfahren nach Anspruch 1, dadurch gekennzeichnet, daß man nach Einfüllung des Kunststoffes und Entfernung der Montage-Hilfsvorrichtung (7, 33) in den Kommutatorrohling (5) parallel zur Welle (1) verlaufende Isolationsschlitze (20) einsägt.

9. Verfahren nach Anspruch 1, dadurch gekennzeichnet, daß man durch die Kunststoff-Füllung (19) Nuten (15) im Blechpaket (2), welche die Drahtwicklung (14) aufnehmen, verschließt.

10. Verfahren nach Anspruch 1, dadurch gekennzeichnet, daß man die durch den Kunststoff verbundene Einheit an ihrer Außenseite einspannt und an den Enden der Welle (1) Lagersitze ausbildet.

11. Verfahren nach Anspruch 1, dadurch gekennzeichnet, daß man als Welle eine Hilfswelle (31, 36) verwendet, die vor dem Einfüllen des Kunststoffes gegen eine Ankerwelle (1) ausgetauscht wird.

12. Verfahren nach Anspruch 11, dadurch gekennzeichnet, daß man eine Hilfswelle (36) mit größerem Durchmesser als die Ankerwelle (1) verwendet und hierdurch beim Füllen mit Kunststoff eine zusätzliche Isolation (37) zwischen Ankerwelle (1) und Blechpaket (2) ausbildet.

13. Verfahren nach Anspruch 4, dadurch gekennzeichnet, daß man diejenigen Enden der Kommutatorsegmente (26), welche den Schweißstellen der Drahtwicklung (14) gegenüberliegen, mit absatzartigen Ausnehmungen (42) versieht, die ebenfalls mit Kunststoff gefüllt werden.

## Claims

1. Method for manufacturing an armature (21) for an electric motor, said armature being provided with a shaft (1), a stack of laminations (2) arranged on said shaft, a commutator (25) likewise arranged on said shaft and comprising several commutator segments and a plastic filling (19), and a wire winding (14) wound around said stack of laminations and welded to said commutator, wherein
a) a commutator blank (5) is first fixedly arranged without plastic filling by means of an auxiliary assembly device (7, 32, 33) on a shaft (1; 31, 36),
b) said wire winding (14) is then attached and welded to said commutator blank (5),
c) the assembly consisting of commutator blank (5), stack of laminations (2), wire winding (14) and auxiliary assembly device (7; 32, 33) is subsequently enclosed by a mould (18), with said auxiliary assembly device (7; 33) forming part of this mould and codetermining the outer shape of said plastic filling (19),
d) said assembly consisting of commutator blank (5), stack of laminations (2), wire winding (14) and auxiliary assembly device (7; 33) in said mould (18) is then filled with plastic and united into an inherently stable, compact unit, and, finally,
e) after removal of said assembly (5, 2, 7, 33, 14) from said mould (18), said auxiliary device (7; 33) is removed again and said commutator blank (5) is made into said final commutator (25).

2. Method as defined in claim 1, characterized in that a cylindrical assembly bush (7) with a bottom part (8) arranged on an end face thereof is used as auxiliary assembly device, said assembly bush enclosing and thereby supporting said commutator blank (5) on the outside thereof and being pushable with a bore (9) provided in said bottom part onto said shaft (1).

3. Method as defined in claim 1, characterized in that a commutator blank (5) made up of individual commutator segments (26) is used, said commutator segments being, on the one hand, supported on an auxiliary shaft (31) and, on the other hand, enclosed on the outside thereof by a rigid ring (33) serving as auxiliary assembly device.

4. Method as defined in claim 3, characterized in that said individual commutator segments (26) are electrically insulated from one another in said auxiliary device (33).

5. Method as defined in claim 1, characterized in that said plastic filling (19) is produced by injection moulding, transfer moulding or compression moulding.

6. Method as defined in claim 1, characterized in that windows (23) are formed on said commutator blank (5) on one end face or both end faces thereof and are filled out with plastic.

7. Method as defined in claim 1, characterized in that the welding joints at which said wire winding (14) is joined to said commutator blank (5) are likewise enclosed by plastic.

8. Method as defined in claim 1, characterized in that after introducing said plastic and removing said auxiliary assembly device (7, 33), insulating slots (20) extending parallel to said shaft (1) are sawn in said commutator blank (5).

9. Method as defined in claim 1, characterized in that grooves (15) in said stack of laminations (2) which receive said wire winding (14) are closed by said plastic filling (19).

10. Method as defined in claim 1, characterized in that the unit combined by said plastic filling is clamped on the outer side thereof and bearing seats are formed at the ends of said shaft (1).

11. Method as defined in claim 1, characterized in that an auxiliary shaft (31, 36) is used as shaft, said auxiliary shaft being exchanged for an armature shaft (1) before said plastic is introduced.

12. Method as defined in claim 11, characterized in that an auxiliary shaft (36) with a larger diameter than that of said armature shaft (1) is used, and an additional insulation (37) is thereby formed between armature shaft (1) and stack of laminations (2) when plastic is introduced.

13. Method as defined in claim 4, characterized in that those ends of said commutator segments (26) which are located opposite said welding joints of said wire winding (14) are provided with shoulder-like recesses (42) which are likewise filled with plastic.

## Revendications

1. Procédé de fabrication d'un induit (21) pour un motcur électrique, dans lequel l'induit est doté d'un arbre (1), d'un empilement de tôles (2) agencé sur l'arbre, d'un commutateur (25) également agencé sur l'arbre et comportant plusieurs segments de commutateur et un remplissage en matière plastique (19), ainsi que d'un enroulement de fil (14) qui entoure l'empilement de tôles et qui est soudé au commutateur, dans lequel on procède comme suit :
a) on agence tout d'abord fermement une ébauche de commutateur (5) sans remplissage en matière plastique sur un arbre (1 ; 31, 36) au moyen d'un dispositif auxiliaire de montage (7, 32, 33), suite à quoi
b) on met en place l'enroulement de fil (14) et on le soude à l'ébauche de commutateur (5), puis
c) on enferme au moyen d'un outil de moulage (18) l'ensemble formé de l'ébauche de commutateur (5), de l'empilement de tôles (2), de l'enroulement de fil (14) et du dispositif auxiliaire de montage (7 ; 32, 33), de sorte que le dispositif auxiliaire de montage (7 ; 33) constitue une partie de cet outil, et détermine conjointement la forme extérieure du remplissage en matière plastique (19), suite à quoi
d) l'ensemble formé par l'ébauche de commutateur (5), l'empilement de tôles (2), l'enroulement de fil (14) et le dispositif auxiliaire de montage (7 ; 33) est rempli de matière plastique dans l'outil de moulage (18) et est réuni pour former une unité compacte et solide par elle-même, puis enfin
e) le dispositif auxiliaire (7 ; 33) est à nouveau enlevé après enlèvement de l'ensemble (5, 2, 7, 33, 14) hors de l'outil de moulage (18), et l'ébauche de commutateur (5) est convertie dans le commutateur définitif (25).

2. Procédé selon la revendication 1, caractérisé en ce que l'on utilise comme dispositif auxiliaire de montage une douille de montage cylindrique (7) avec une partie de fond (8) agencée sur un côté frontal, laquelle entoure l'ébauche de commutateur (5) en la supportant à l'extérieur, et est susceptible d'être enfilée sur l'arbre (1) au moyen d'un perçage (9) prévu dans la partie de fond.

3. Procédé selon la revendication 1, caractérisé en ce que l'on utilise une ébauche de commutateur (5) en segments de commutateur individuels (26), qui s'appuient d'une part sur un arbre auxiliaire (31) et qui sont d'autre part entourés à l'extérieur par une bague rigide (33) qui sert de dispositif auxiliaire de montage.

4. Procédé selon la revendication 3, caractérisé en ce que l'on isole les segments de commutateur individuels (26) dans le dispositif auxiliaire (33) les uns des autres sur le plan électrique.

5. Procédé selon la revendication 1, caractérisé en ce que l'on procède au remplissage en matière plastique (19) par moulage par injection, par pressage par injection, ou par pressage sous compression.

6. Procédé selon la revendication 1, caractérisé en ce que l'on réalise des fenêtres (23) sur l'une ou sur les deux faces frontales de l'ébauche de commutateur (5), qui sont remplies de matière plastique.

7. Procédé selon la revendication 1, caractérisé en ce que l'on enrobe également de matière plastique les emplacements de soudure auxquels l'enroulement de fil (14) est relié à l'ébauche de commutateur (5).

8. Procédé selon la revendication 1, caractérisé en ce que l'on découpe à la scie des fentes d'isolation parallèlement à l'arbre (1) dans l'ébauche de commutateur (5) après remplissage de la matière plastique et enlèvement du dispositif auxiliaire de montage (7, 33).

9. Procédé selon la revendication 1, caractérisé en ce que grâce au remplissage en matière plastique (19) on obture des gorges (15) dans l'empilement de tôles (2), qui reçoivent l'enroulement de fil (14).

10. Procédé selon la revendication 1, caractérisé en ce que l'on serre l'unité reliée par la matière plastique sur sa face extérieure, et en ce que l'on réalise des sièges de palier aux extrémités de l'arbre (1).

11. Procédé selon la revendication 1, caractérisé en ce que l'on utilise comme arbre un arbre auxiliaire (31, 36), lequel est échangé pour un arbre d'induit (1) avant le remplissage de la matière plastique.

12. Procédé selon la revendication 11, caractérisé en ce que l'on utilise un arbre auxiliaire (36) avec un diamètre supérieur à celui de l'arbre d'induit (1), et en ce que l'on réalise grâce à ceci lors du remplissage en matière plastique une isolation additionnelle (37) entre l'arbre d'induit (1) et l'empilement de tôles (2).

13. Procédé selon la revendication 4, caractérisé en ce que l'on prévoit aux extrémités des segments de commutateur (26), qui sont opposées aux emplacements de soudure de l'enroulement de fil (14), des évidements (14) en forme de talon, qui sont également remplis de matière plastique.
